# DEMANDE DE BREVET EUROPEEN

(11) **EP 3 584 488 A1**
(43) Date de publication de la demande: **25.12.2019**
(21) Numéro de dépôt: 19178755.5
(22) Date de dépôt: 06.06.2019
(51) Int. Cl.: F16L 23/16, F16L 23/08

(54) **CANALISATION COMPRENANT DEUX CONDUITS RELIÉS PAR UN SYSTÈME DE RACCORDEMENT AMÉLIORÉ**

(30) Priorité: 20.06.2018 FR 1855446
(71) Demandeur: Airbus Operations, 31060 Toulouse (FR)
(72) Inventeur: ROVATTI, Didier, 31400 Toulouse (FR); DOSTES, Stéphane, 31530 Montaigut-sur-Save (FR); SEGALEN, Jérémy, 31300 Toulouse (FR)
(74) Mandataire: Fantin, Laurent

(57) **Abrégé**

L'invention a pour objet une canalisation comprenant des premier et deuxième conduits (22.1, 22.2) et un système de raccordement (26) reliant les premier et deuxième conduits (22.1, 22.2) et comprenant :
- une première collerette (40.1), avec une section longitudinale en U ouverte vers le premier conduit (22.1), qui présente une première branche de jonction (42.1) reliée au premier conduit (22.1) et une première branche terminale (44.1) prolongée par un prolongement tubulaire (50) sensiblement coaxial au premier conduit (22.1),
- une deuxième collerette (40.2), avec une section longitudinale en U ouverte vers le deuxième conduit (22.2), qui présente une deuxième branche de jonction (42.2) reliée au deuxième conduit (22.2) et une deuxième branche terminale (44.2) présentant une extrémité (52) centrée autour du prolongement tubulaire (50) en fonctionnement,
- un collier de serrage (36) comportant une gorge intérieure (62) configurée pour loger au moins partiellement les première et deuxième collerettes (40.1, 40.2) afin de maintenir les premier et deuxième conduits (22.1, 22.2) aboutés.

Ce système de raccordement permet d'obtenir un centrage des premier et deuxième conduits ce qui facilite le montage des premier et deuxième conduits et empêche leur désaxage en fonctionnement.

## Description

La présente demande se rapporte à une canalisation comprenant deux conduits reliés par un système de raccordement amélioré.

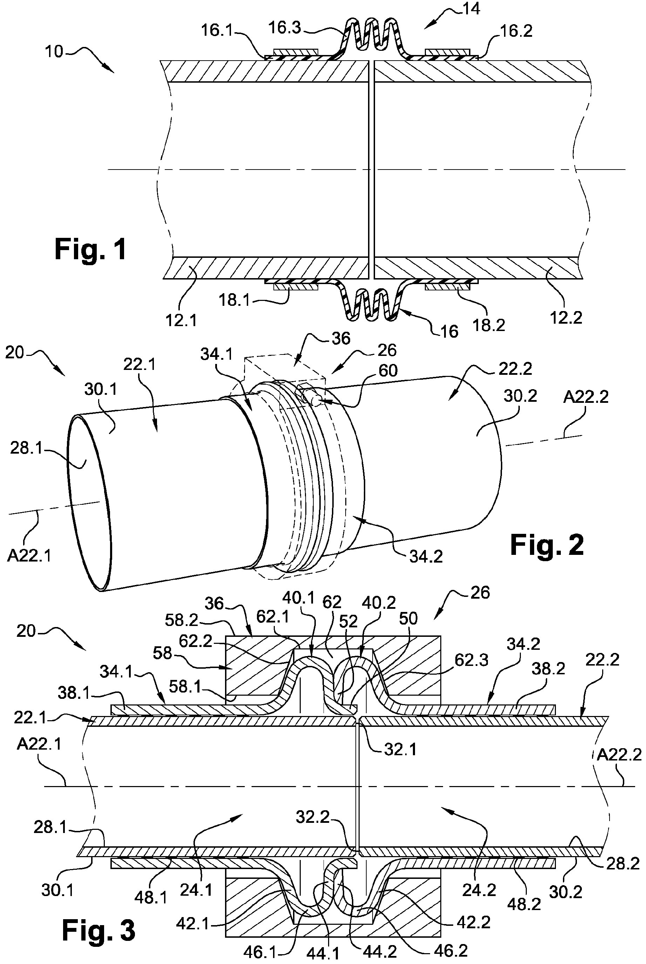

Sur la figure 1, une canalisation 10 comprend un premier conduit 12.1 et un deuxième conduit 12.2 disposés bout-à-bout ainsi qu'un système de raccordement 14 reliant les premier et deuxième conduits 12.1, 12.2.

Selon un mode de réalisation, le système de raccordement 14 comprend un manchon 16 présentant des première et deuxième extrémités cylindriques 16.1, 16.2, configurées pour s'emmancher respectivement sur les premier et deuxième conduits 12.1, 12.2, et une partie centrale comportant au moins un soufflet 16.3 ; ainsi que des premier et deuxième colliers de serrage 18.1, 18.2 configurés pour serrer les première et deuxième extrémités 16.1, 16.2 du manchon 16 sur les premier et deuxième conduits 12.1, 12.2.

Dans le cas d'une canalisation installée dans un aéronef, les premier et deuxième conduits coaxiaux peuvent se désaxer en raison par exemple de vibrations.

Selon un autre mode de réalisation illustré par la demande de brevet FR-3.030.673, un système de raccordement comprend :
- un premier conduit, appelé conduit femelle, comportant à une de ses extrémités un logement,
- un deuxième conduit, appelé conduit mâle, comportant à une de ses extrémités une tête configurée pour se loger dans le logement du premier conduit et présentant une gorge qui s'étend sur toute la circonférence de la surface extérieure de la tête,
- un joint annulaire qui se loge dans la gorge et qui est comprimé entre la gorge de la tête du deuxième conduit et la paroi du logement du premier conduit.

Ce système de raccordement n'est pas pleinement satisfaisant car il existe des risques de fuites, notamment en cas d'oubli du joint annulaire lors d'une opération de maintenance. Par ailleurs, il existe des risques d'endommagement du joint annulaire lors du montage de la tête du deuxième conduit dans le logement du premier conduit.

La présente invention vise à remédier à tout ou partie des inconvénients de l'art antérieur.

A cet effet, l'invention a pour objet une canalisation comprenant des premier et deuxième conduits et un système de raccordement configuré pour relier les premier et deuxième conduits, caractérisée en ce que le système de raccordement comprend :
- un premier manchon, positionné à l'extérieur du premier conduit, comportant :
   ∘ une première collerette, avec une section longitudinale en U ouverte vers le premier conduit, qui présente une première branche de jonction reliée au premier conduit, une première branche terminale orientée en fonctionnement vers le deuxième conduit et une première base reliant les premières branches de jonction et terminale,
   ∘ un prolongement tubulaire relié à la première branche terminale, sensiblement coaxial au premier conduit et espacé dudit premier conduit,
- un deuxième manchon, positionné à l'extérieur du deuxième conduit, comportant une deuxième collerette, avec une section longitudinale en U ouverte vers le deuxième conduit, qui présente une deuxième branche de jonction reliée au deuxième conduit, une deuxième branche terminale orientée en fonctionnement vers le premier conduit et une deuxième base reliant les deuxièmes branches de jonction et terminale, la deuxième branche terminale présentant une extrémité centrée autour du prolongement tubulaire du premier manchon en fonctionnement,
- les premier et deuxième manchons étant positionnés par rapport aux premier et deuxième conduits de sorte qu'en fonctionnement, le prolongement tubulaire de la première branche terminale soit positionné entre l'extrémité de la deuxième branche terminale et le premier ou deuxième conduit,
- un collier de serrage comportant une gorge intérieure orientée vers les premier et deuxième conduits et configurée pour loger, au moins partiellement, les première et deuxième collerettes afin de maintenir les premier et deuxième conduits aboutés.

Ce système de raccordement permet d'obtenir un centrage des premier et deuxième conduits, ce qui facilite le montage et empêche tout désaxage des premier et deuxième conduits en fonctionnement.

Selon un mode de réalisation, l'extrémité de la deuxième branche terminale comprend un chanfrein pour obtenir un autocentrage de la deuxième branche sur le prolongement tubulaire.

Selon une autre caractéristique, les premier et deuxième manchons comprennent des première et deuxième parties cylindriques reliées respectivement aux premier et deuxième conduits par des première et deuxième liaisons étanches.

Selon une autre caractéristique, les première et deuxième branches terminales comprennent respectivement des première et deuxième surfaces d'appui, les premier et deuxième manchons étant positionnés par rapport aux premier et deuxième conduits de sorte qu'en fonctionnement les première et deuxième faces d'appui soient comprimées l'une contre l'autre.

Selon une autre caractéristique, la gorge intérieure et les première et deuxième collerettes sont configurées de sorte qu'un serrage du collier de serrage provoque une déformation élastique des première et deuxième collerettes et une augmentation d'un effort de compression des première et deuxième faces d'appui l'une contre l'autre.

Selon une configuration, la première face d'appui est positionnée dans un premier plan transversal séparé d'une première distance d'un premier chant terminal du premier conduit ; et la deuxième face d'appui est positionnée dans un deuxième plan transversal, décalé en direction du premier conduit par rapport à un deuxième chant terminal du deuxième conduit, séparé du deuxième chant terminal d'une deuxième distance sensiblement égale ou légèrement supérieure à la première distance.

Selon une configuration, le prolongement tubulaire présente une face terminale positionnée dans un même plan transversal qu'un premier chant terminal du premier conduit ou dans un plan transversal légèrement décalé par rapport au premier chant terminal vers le deuxième conduit.

D'autres caractéristiques et avantages ressortiront de la description de l'invention qui va suivre, description donnée à titre d'exemple uniquement, en regard des dessins annexés parmi lesquels :
- la figure 1 est une coupe longitudinale d'un système de raccordement qui illustre un mode de réalisation de l'art antérieur,
- la figure 2 est une vue en perspective d'un système de raccordement de deux conduits qui illustre un mode de réalisation de l'invention,
- la figure 3 est une coupe longitudinale du système de raccordement visible sur la figure 2,

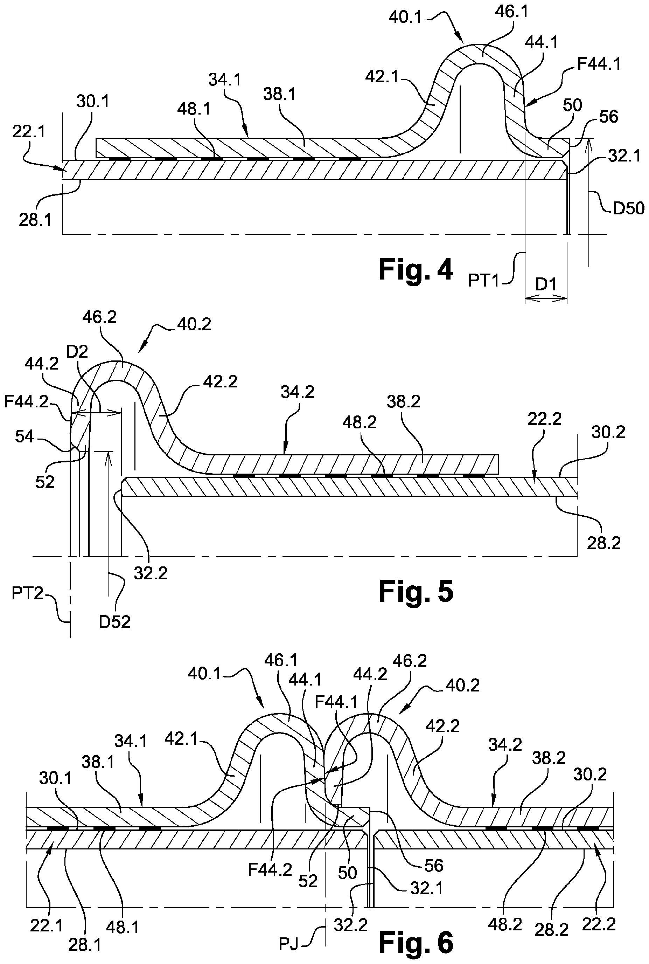

- la figure 4 est une coupe longitudinale d'un premier conduit équipé d'un premier manchon du système de raccordement visible sur la figure 2,
- la figure 5 est une coupe longitudinale d'un deuxième conduit équipé d'un deuxième manchon du système de raccordement visible sur la figure 2, et
- la figure 6 est une coupe longitudinale des premier et deuxième conduits visibles sur les figures 4 et 5 mis bout-à-bout.

Selon un mode de réalisation visible sur les figures 2 et 3, une canalisation 20 d'un aéronef comprend un premier conduit 22.1 présentant une première extrémité 24.1, un deuxième conduit 22.2 présentant une deuxième extrémité 24.2 et un système de raccordement 26 configuré pour relier les première et deuxième extrémités 24.1, 24.2 des premier et deuxième conduits 22.1 et 22.2.

Selon une configuration, le premier conduit 22.1 est un tube cylindrique qui présente un premier axe de révolution A22.1, une première surface intérieure 28.1, une première surface extérieure 30.1 et un premier chant terminal 32.1 reliant les premières surfaces intérieure et extérieure 28.1, 30.1. Les premières surfaces intérieure et extérieure 28.1, 30.1 sont coaxiales au premier axe de révolution A22.1 et le premier chant terminal 32.1 est approximativement perpendiculaire au premier axe de révolution A22.1.

Le deuxième conduit 22.2 est un tube cylindrique qui présente un deuxième axe de révolution A22.2, une deuxième surface intérieure 28.2, une deuxième surface extérieure 30.2 et un deuxième chant terminal 32.2 reliant les deuxièmes surfaces intérieure et extérieure 28.2, 30.2. Les deuxièmes surfaces intérieure et extérieure 28.2, 30.2 sont coaxiales au deuxième axe de révolution A22.2 et le deuxième chant terminal 32.2 est approximativement perpendiculaire au deuxième axe de révolution A22.2.

Les premier et deuxième conduits 22.1, 22.2 ont approximativement le même diamètre intérieur.

En fonctionnement, les premier et deuxième axes de révolution A22.1, A22.2 sont confondus.

Pour la présente demande, une direction longitudinale est parallèle aux premier et deuxième axes de révolution A22.1, A22.2. Un plan transversal est perpendiculaire aux premier et deuxième axes de révolution A22.1, A22.2.

Le système de raccordement 26 comprend un premier manchon 34.1 solidaire du premier conduit 22.1, positionné au niveau de la première extrémité 24.1, un deuxième manchon 34.2 solidaire du deuxième conduit 22.2, positionné au niveau de la deuxième extrémité 24.2 ainsi qu'un collier de serrage 36.

Le premier manchon 34.1, positionné à l'extérieur du premier conduit 22.1, comprend une première partie cylindrique 38.1 solidaire du premier conduit 22.1 et une première collerette 40.1, avec une section longitudinale en U ouverte vers le premier conduit 22.1, qui présente une première branche de jonction 42.1 reliée à la première partie cylindrique 38.1, une première branche terminale 44.1 orientée en fonctionnement vers le deuxième conduit 22.2 et une première base 46.1 reliant les premières branches de jonction et terminale 42.1, 44.1 plus écartée du premier conduit 22.1 que les premières branches de jonction et terminale 42.1, 44.1. La première base 46.1 est courbe.

La première partie cylindrique 38.1 est coaxiale au premier conduit 22.1 et présente un diamètre intérieur égal ou légèrement supérieur au diamètre extérieur du premier conduit 22.1.

La première partie cylindrique 38.1 est reliée au premier conduit par une première liaison 48.1, comme par exemple au moins une première soudure.

Le deuxième manchon 34.2, positionné à l'extérieur du deuxième conduit 22.2, comprend une deuxième partie cylindrique 38.2 solidaire du deuxième conduit 22.2 et une deuxième collerette 40.2, avec une section longitudinale en U ouverte vers le deuxième conduit 22.2, qui présente une deuxième branche de jonction 42.2 reliée à la deuxième partie cylindrique 38.2, une deuxième branche terminale 44.2 orientée en fonctionnement vers le premier conduit 22.1 et une deuxième base 46.2 reliant les deuxièmes branches de jonction et terminale 42.21, 44.2 plus écartée du deuxième conduit 22.2 que les deuxièmes branches de jonction et terminale 42.2, 44.2. La deuxième base 46.2 est courbe.

La deuxième partie cylindrique 38.2 est coaxiale au deuxième conduit 22.2 et présente un diamètre intérieur égal ou légèrement supérieur au diamètre extérieur du deuxième conduit 22.2.

La deuxième partie cylindrique 38.2 est reliée au deuxième conduit 22.2 par une deuxième liaison 48.2, comme par exemple au moins une deuxième soudure.

Selon un mode de réalisation, les premier et deuxième manchons 34.1, 34.2 sont réalisés en un matériau leur permettant de se déformer de manière élastique.

Selon une configuration, les premier et deuxième manchons 34.1, 34.2 comprennent chacun plusieurs secteurs angulaires reliés entre eux pour obtenir une forme tubulaire.

Selon des modes de réalisation, les premier et deuxième manchons 34.1, 34.2 sont réalisés par pliage ou par hydroformage.

En fonctionnement, la première branche terminale 44.1 présente une première face d'appui F44.1 configurée pour prendre appui contre une deuxième face d'appui F44.2 de la deuxième branche terminale 44.2.

Le premier manchon 34.1 comprend un prolongement tubulaire 50, relié à la première branche terminale 44.1, orienté vers le deuxième conduit 22.2 en fonctionnement.

Ce prolongement tubulaire 50 est sensiblement coaxial au premier conduit 22.1 et espacé de ce dernier pour permettre à la première collerette 40.1 de se déformer de manière élastique.

Le prolongement tubulaire 50 présente un diamètre extérieur D50.

En complément, la deuxième branche terminale 44.2 présente une extrémité 52 centrée autour du prolongement tubulaire 50 en fonctionnement. L'extrémité 52 de la deuxième branche terminale 44.2 présente un diamètre intérieur D52 sensiblement égal, ou très légèrement supérieur au jeu de montage près, au diamètre extérieur D50 du prolongement tubulaire 50.

Les premier et deuxième manchons 34.1, 34.2 sont positionnés par rapport aux premier et deuxième conduits 22.1, 22.2 de sorte qu'en fonctionnement, le prolongement tubulaire 50 de la première branche terminale 44.1 soit positionné entre l'extrémité 52 de la deuxième branche terminale 44.2 et le premier ou deuxième conduit 22.1, 22.2. Cette configuration permet d'obtenir un centrage des premier et deuxième conduits 22.1, 22.2 et autorise un éventuel désaxage des premier et deuxième conduits 22.1, 22.2 en fonctionnement. Un tel centrage permet d'éviter que les premier et deuxième conduits 22.1, 22.2 ne se désaxent en raison de vibrations ou d'autres phénomènes en vol.

L'extrémité 52 de la deuxième branche terminale 44.2 comprend un chanfrein 54 pour obtenir un autocentrage de la deuxième branche 44.2 sur le prolongement tubulaire 50.

Selon une caractéristique de l'invention, les premier et deuxième manchons 34.1, 34.2 sont positionnés par rapport aux premier et deuxième conduits 22.1, 22.2 de sorte qu'en fonctionnement les première et deuxième faces d'appui F44.1 et F44.2 soient comprimées l'une contre l'autre. Cette configuration permet d'améliorer l'étanchéité entre les premier et deuxième manchons 34.1, 34.2. Les première et deuxième liaisons 48.1 et 48.2 étant étanches, le système de raccordement 26 permet d'obtenir une liaison étanche entre les premier et deuxième conduits 22.1, 22.2.

Selon une configuration, lorsque les première et deuxième faces d'appui F44.1 et F44.2 sont comprimées l'une contre l'autre en fonctionnement, les premier et deuxième chants terminaux 32.1 32.2 sont faiblement espacés et quasiment jointifs. Ainsi, l'écoulement d'air est très peu perturbé en fonctionnement.

Selon un mode de réalisation, le prolongement tubulaire 50 solidaire du premier conduit 22.1 présente une face terminale 56 positionnée dans un même plan transversal que le premier chant terminal 32.1, ou dans un plan transversal légèrement décalé par rapport au premier chant terminal 32.1 vers le deuxième conduit 22.2.

La première face d'appui F44.1 est positionnée dans un premier plan transversal PT1 séparé du premier chant terminal 32.1 d'une première distance D1. La deuxième face d'appui F44.2 est positionnée dans un deuxième plan transversal PT2, décalé par rapport au deuxième chant terminal 32.2 en direction du premier conduit 22.1, séparé du deuxième chant terminal 32.2 d'une deuxième distance D2 sensiblement égale ou légèrement supérieure à la première distance D1. Cet agencement permet que les première et deuxième faces d'appui F44.1 et F44.2 soient légèrement comprimées l'une contre l'autre, en fonctionnement, lorsque les premier et deuxième chants terminaux 32.1, 32.2 sont faiblement espacés.

Le collier de serrage 36 comprend une bande de matière 58, présentant une face intérieure 58.1 orientée vers les premier et deuxième conduits 22.1, 22.2 et une face extérieure 58.2 parallèle à la face intérieure 58.1, ainsi qu'un système de serrage 60 positionné à une extrémité de la bande de matière 58. Cette dernière traverse le système de serrage 60 de manière à former un collier, le système de serrage 60 étant configuré pour ajuster le serrage du collier et le maintenir serré. Le système de serrage 60 n'est pas plus décrit car il peut être identique aux systèmes de serrage existants.

La face intérieure 58.1 comprend une gorge intérieure 62, orientée vers les premier et deuxième conduits 22.1, 22.2, qui présente un fond 62.1 et deux flancs 62.2, 62.3 évasés. Selon un mode de réalisation, le fond 62.1 est parallèle à la face intérieure 58.1 et la gorge intérieure 62 présente une section en forme de trapèze isocèle.

La gorge intérieure 62 est configurée pour loger au moins partiellement les première et deuxième collerettes 40.1, 40.2 afin de maintenir les premier et deuxième conduits 22.1, 22.2 aboutés.

En fonctionnement, les premier et deuxième flancs 62.1, 62.2 coopèrent respectivement avec les première et deuxième branches de jonction 42.1, 42.2.

La section de la gorge intérieure 62, les formes des première et deuxième collerettes 40.1, 40.2 sont configurées de sorte que le serrage du collier de serrage 36 provoque une déformation élastique des première et deuxième collerettes 40.1, 40.2 et une augmentation de l'effort de compression des première et deuxième faces d'appui F44.1 et F44.2 l'une contre l'autre.

Selon une configuration, en fonctionnement, les première et deuxième faces d'appui F44.1 et F44.2 sont approximativement positionnées dans un plan transversal, appelé plan de jonction PJ, en fonctionnement. Les première et deuxième collerettes 40.1, 40.2 ont des formes symétriques par rapport au plan de jonction PJ.

Les avantages procurés par le système de raccordement précédemment décrit sont les suivants :
- Contrairement au mode de réalisation de l'art antérieur qui prévoit un conduit mâle qui s'emmanche dans un conduit femelle, les premier et deuxième conduits ont les mêmes diamètres intérieurs au niveau du système de raccordement ce qui permet de réduire les perturbations du flux canalisé dans les premier et deuxième conduits 22.1, 22.2.
- Le système de raccordement de l'invention ne nécessite aucun usinage ce qui limite les coûts de production.
- Le système de raccordement ne nécessite pas de joint annulaire.
- Le centrage des premier et deuxième manchons 34.1, 34.2 facilite le montage des premier et deuxième conduits 22.1, 22.2 et limite les risques de désaxage des premier et deuxième conduits 22.1, 22.2 en fonctionnement.

## Revendications

1. Canalisation comprenant des premier et deuxième conduits (22.1, 22.2) et un système de raccordement (26) configuré pour relier les premier et deuxième conduits (22.1, 22.2), **caractérisée en ce que** le système de raccordement (26) comprend :
- un premier manchon (34.1), positionné à l'extérieur du premier conduit (22.1), comportant :
∘ une première collerette (40.1), avec une section longitudinale en U ouverte vers le premier conduit (22.1), qui présente une première branche de jonction (42.1) reliée au premier conduit (22.1), une première branche terminale (44.1) orientée en fonctionnement vers le deuxième conduit (22.2) et une première base (46.1) reliant les premières branches de jonction et terminale (42.1, 44.1),
∘ un prolongement tubulaire (50) relié à la première branche terminale (44.1), sensiblement coaxial au premier conduit (22.1) et espacé dudit premier conduit (22.1),
- un deuxième manchon (34.2), positionné à l'extérieur du deuxième conduit (22.1), comportant une deuxième collerette (40.2), avec une section longitudinale en U ouverte vers le deuxième conduit (22.2), qui présente une deuxième branche de jonction (42.2) reliée au deuxième conduit (22.2), une deuxième branche terminale (44.2) orientée en fonctionnement vers le premier conduit (22.1) et une deuxième base (46.2) reliant les deuxièmes branches de jonction et terminale (42.2, 44.2), la deuxième branche terminale (44.2) présentant une extrémité (52) centrée autour du prolongement tubulaire (50) du premier manchon (34.1) en fonctionnement,
- les premier et deuxième manchons (34.1, 34.2) étant positionnés par rapport aux premier et deuxième conduits (22.1, 22.2) de sorte qu'en fonctionnement, le prolongement tubulaire (50) de la première branche terminale (44.1) soit positionné entre l'extrémité (52) de la deuxième branche terminale (44.2) et le premier ou deuxième conduit (22.1, 22.2),
- un collier de serrage (36) comportant une gorge intérieure (62) orientée vers les premier et deuxième conduits (22.1, 22.2) et configurée pour loger, au moins partiellement, les première et deuxième collerettes (40.1, 40.2) afin de maintenir les premier et deuxième conduits (22.1, 22.2) aboutés.

2. Canalisation selon la revendication 1, **caractérisée en ce que** l'extrémité (52) de la deuxième branche terminale (44.2) comprend un chanfrein (54) pour obtenir un autocentrage de la deuxième branche (44.2) sur le prolongement tubulaire (50).

3. Canalisation selon l'une des revendications précédentes, **caractérisée en ce que** les premier et deuxième manchons (34.1, 34.2) comprennent des première et deuxième parties cylindriques (38.1, 38.2) reliées respectivement aux premier et deuxième conduits (22.1, 22.2) par des première et deuxième liaisons (48.1, 48.2) étanches.

4. Canalisation selon l'une des revendications précédentes, **caractérisée en ce que** les première et deuxième branches terminales comprennent respectivement des première et deuxième surfaces d'appui (F44.1, F44.2) et **en ce que** les premier et deuxième manchons (34.1, 34.2) sont positionnés par rapport aux premier et deuxième conduits (22.1, 22.2) de sorte qu'en fonctionnement les première et deuxième faces d'appui (F44.1, F44.2) soient comprimées l'une contre l'autre.

5. Canalisation selon la revendication précédente, **caractérisée en ce que** la gorge intérieure (62) et les première et deuxième collerettes (40.1, 40.2) sont configurées de sorte qu'un serrage du collier de serrage (36) provoque une déformation élastique des première et deuxième collerettes (40.1, 40.2) et une augmentation d'un effort de compression des première et deuxième faces d'appui (F44.1, F44.2) l'une contre l'autre.

6. Canalisation selon la revendication précédente, **caractérisée en ce que** la première face d'appui (F44.1) est positionnée dans un premier plan transversal (PT1) séparé d'une première distance (D1) d'un premier chant terminal (32.1) du premier conduit (22.1) et **en ce que** la deuxième face d'appui (F44.2) est positionnée dans un deuxième plan transversal (PT2), décalé en direction du premier conduit (22.1) par rapport à un deuxième chant terminal (32.2) du deuxième conduit (22.2), séparé du deuxième chant terminal (32.2) d'une deuxième distance (D2) sensiblement égale ou légèrement supérieure à la première distance (D1).

7. Canalisation selon l'une des revendications précédentes, **caractérisée en ce que** le prolongement tubulaire (50) présente une face terminale (56) positionnée dans un même plan transversal qu'un premier chant terminal (32.1) du premier conduit (22.1), ou dans un plan transversal légèrement décalé par rapport au premier chant terminal (32.1) vers le deuxième conduit (22.2).
